# EUROPÄISCHE PATENTSCHRIFT

(11) **EP 2 061 054 B1**
(45) Veröffentlichungstag und Bekanntmachung des Hinweises auf die Patenterteilung: **27.03.2013**
(21) Anmeldenummer: 08166772.7
(22) Anmeldetag: 16.10.2008
(51) Int. Cl.: H01H 23/02, H01H 9/18

(54) **Elektrischer Schalter**
Electric switch
Commutateur électrique

(30) Priorität: 14.11.2007 DE 102007054370
(43) Veröffentlichungstag der Anmeldung: 20.05.2009
(73) Patentinhaber: Siemens Aktiengesellschaft, 80333 München (DE)
(72) Erfinder: Dietz, Martin, 93105 Tegernheim (DE)

(56) Entgegenhaltungen:
- EP-A1- 1 632 967
- DE-A1-102004 050 907
- DE-A1-102005 053 268
- DE-U1- 20 319 812
- JP-A- 2006 179 350

## Beschreibung

Die Erfindung betrifft einen elektrischen Schalter nach dem Oberbegriff von Patentanspruch 1. Der elektrische Schalter weist somit einen in eine Gebäudewand einsetzbaren Einsatz und eine mit dem Einsatz verbundene, bei in die Gebäudewand eingesetztem Einsatz von der Seite der Oberfläche der Gebäudewand zugängliche Schaltwippe auf, die ein Funktionselement aufweist, welches im Betrieb elektrische Energie verbraucht.

Im Zentrum des Interesses steht vorliegend die Versorgung des Funktionselements mit Energie. Die Problemstellung kommt insbesondere im Bereich von Steckdosen und (Licht-)Schaltern zustande. Man möchte zunehmend dazu übergehen, die Schaltwippe eines Schalters zu beleuchten. Es besteht sogar der Wunsch, an einem Schalter eine Anzeige vorzusehen, wofür sich aus Platzgründen ebenfalls die Schaltwippe anbietet.

Steckdosen wie Schaltern ist es üblicherweise gemeinsam, dass der in die Gebäudewand eingesetzte Einsatz an Netzleitungen angeschlossen ist, die die Netzspannung von 120/230 Volt tragen. Es muss nun verhindert werden, dass von der Oberfläche der Gebäudewand her die Netzspannung zugänglich wird. Hierbei müssen auf jeden Fall bestimmte Sicherheitsvorschriften beachtet werden. Die Lösung, das Funktionselement über Kabel mit Energie zu versorgen, ist daher nachteilig, insbesondere wenn das Bauteil, das das Funktionselement umfasst, abnehmbar sein soll, wie dies Lichtschalter sind, um z.B. Anstricharbeiten an der Gebäudewand zu ermöglichen.
Es gibt Schalter, die von der Netzspannung dadurch getrennt sind, dass durch die Schaltwippe nicht mechanisch direkt das Schalten erfolgt, sondern dass unter Verwendung von elektronischen Bauelementen ein Befehl (Datentelegramm) erzeugt wird, der zu einem eigentlichen Schalter gesandt wird, der an einer ganz anderen Stelle positioniert ist, und der den Befehl auszuwerten imstande ist. Diese elektronischen Systeme sind jedoch aufwendig und kompliziert und dementsprechend auch teuer.

Die DE 102 39 360 A1 beschreibt eine Leuchte, die für einen Bereich außerhalb von Gebäuden (Straßen, Fahrbahnen, Wege, Plätze, Hauseingänge oder dergleichen) gedacht ist, speziell als Wegmarkierung oder als Wegbeleuchtung. Die Leuchte ist in architektonischen Elementen, beispielsweise Wänden, oder aber in Bodenelementen integriert. Die Spannungsversorgung der Leuchte erfolgt kontaktlos durch induktive oder kapazitive Kopplung. Die DE 102 39 360 A1 beschreibt, dass dadurch die Leuchte gefahrenfrei und ohne spezielle Kenntnisse installiert werden kann.

Die EP 1 632 967 A1 betrifft eine elektrische Schaltvorrichtung mit einem Betätigungselement und mindestens einem Anzeigemittel zur Anzeige des Funktions- oder Schaltzustands der Schaltvorrichtung. Dabei erfolgt die elektrische Energieversorgung drahtlos über mindestens einen induktiven Energieübertrager, mittels welchem das Anzeigeelement versorgt wird.

Aus der JP 2006 197350 A ist ein elektrischer Schalter gemäß dem Oberbegriff des Anspruchs 1 bekannt. Der elektrische Schalter umfasst eine Fernbedienung, die abnehmbar mit dem Schaltelement des elektrischen Schalters verbunden ist. Des Weiteren kann ein elektrischer Energiespeicher der Fernbedienung induktiv aufgeladen werden.

Aus der DE 10 2004 050 907 A1 ist ein Gestaltungselement für ein Bedienfeld einer Vorrichtung bekannt. Dabei können Gestaltungselemente frei auf einem Bedienfeld positioniert werden. Die Energieversorgung und Datenübertragung zu einem Steuermodul erfolgt dabei kontaktlos.

Die DE 203 19 812 U1 beschreibt einen Schalter für eine Funkfernsteuerung, die einen lösbar verbindbaren Tragring zur Montage in handelsüblichen, genormten Installationsdosen aufweist.

Schließlich beschreibt die DE 10 2005 053 268 A1 ein Bedienelement für die Gebäudetechnik, wobei das Bedienelement zumindest ein Anzeigeelement umfasst, dessen Anzeige über eine Schnittstelle oder drahtlos ansteuerbar ist.

Es ist Aufgabe der Erfindung, einen elektrischen Schalter nach dem Oberbegriff von Patentanspruch 1 dahingehend weiterzuentwickeln, dass die im Stand der Technik vorhandenen Probleme beseitigt werden, wobei insbesondere eine preisgünstige Lösung bereitgestellt werden soll, wie Sicherheitsvorschriften eingehalten werden können und dennoch das Funktionselement optimal mit elektrischer Energie versorgt werden kann.

Die Aufgabe wird durch einen elektrischen Schalter mit den Merkmalen gemäß Patentanspruch 1 gelöst.

Somit sind in oder an dem Einsatz Mittel zum Erzeugen eines zeitlich variablen elektromagnetischen Feldes bereitgestellt, und die Schaltwippe umfasst Mittel zum Gewinnen von elektrischem Strom aus dem zeitlich variablen Feld, über den die Energie zum Betrieb des Funktionselements bereitgestellt wird. Mit anderen Worten wird die Energie drahtlos übertragen, nämlich über das zeitlich variable Feld. Durch die drahtlose Übertragung ist gewährleistet, dass eine Netzspannung, auch wenn sie in dem Einsatz selbst anliegt, nicht eine die an der Oberfläche der Gebäudewand befindliche Schaltwippe betätigende Bedienperson gefährdet. Die Schaltwippe kann auch abnehmbar gestaltet werden, ohne dass irgendwelche Probleme mit angeschlossenen Stromkabeln auftreten.

Die Erfindung ermöglicht es, ein bewegliches Bauteil wie etwa die Schaltwippe eines Lichtschalters mit einer großflächigen elektrisch betriebenen Anzeige auszustatten. Dadurch wird der Benutzer über den Schaltzustand informiert. Für die Anzeige wird die OLED-Technologie verwendet, wobei "OLED" für "organic light-emitting diode", organische Leuchtdiode, steht und mit der Anzeige insbesondere eine Displayvorrichtung gemeint ist. Zur OLED-Anzeige gehören Mittel zum Ansteuern der OLED-Anzeige, denn es muss ja auch festgelegt werden, was auf der Anzeige angezeigt wird.

Die Daten, welche angeben, was angezeigt wird, sind bevorzugt nicht a priori festgelegt, sondern von außerhalb festlegbar. Dies wird dadurch ermöglicht, dass die Mittel zum Ansteuern der OLED-Anzeige mit Mitteln zum drahtlosen Empfangen von Daten gekoppelt sind. Mit anderen Worten muss ein Funkempfänger mit einem geeigneten Prozessor oder allgemeiner einer Ansteuerlogik gekoppelt sein. Der Funksender ist im in der Gebäudewand befindlichen Einsatz vorgesehen. Der elektrische Schalter ist Teil eines umfangreichen und aufwendigen Gebäudesystems.

Bei einer einfacheren Ausführungsform umfasst das Funktionselement ein oder mehrere herkömmliche Leuchtdioden oder eine Leuchtdioden-Anordnung (Leuchtdioden-Display).

Zur Erfindung gehört der Einsatz des erfindungsgemäßen elektrischen Schalters in einer Gebäudewand und dem dazu gehörigen Gebäude.

Nachfolgend wird eine bevorzugte Ausführungsform der Erfindung unter Bezug auf die Zeichnungen beschrieben, wobei
- FIG 1: eine perspektivische Ansicht eines erfindungsgemäßen elektrischen Schalters ist,
- FIG 2: eine Explosionsdarstellung einer bei dem erfindungsgemäßen elektrischen Schalter aus FIG 1 verwendeten Schaltwippe ist.

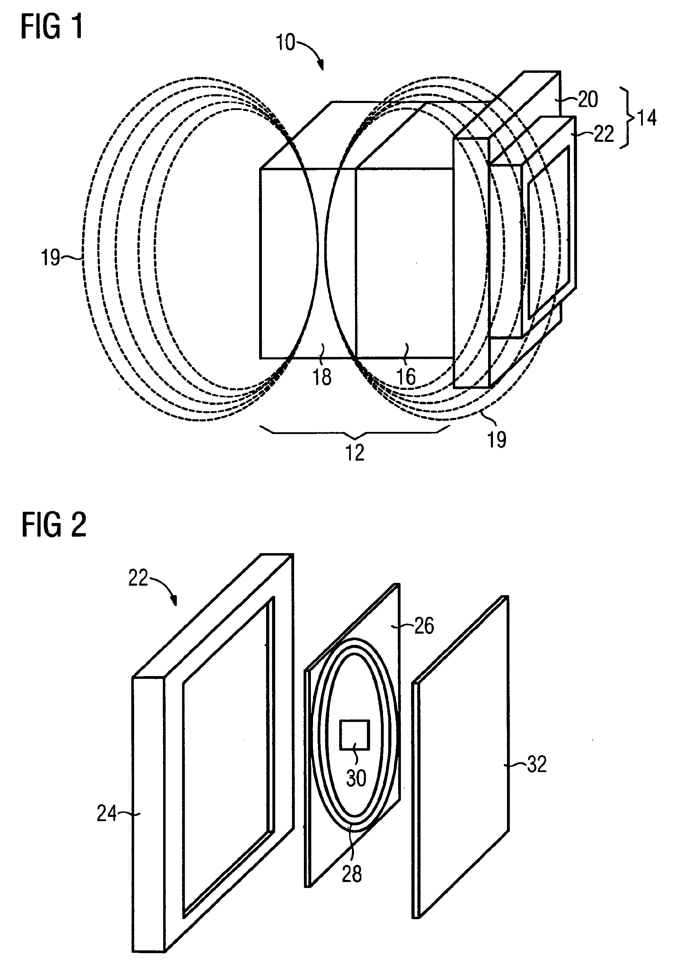

Ein im Ganzen mit 10 bezeichneter elektrischer Schalter umfasst einen Einsatz 12, der in eine Gebäudewand einzusetzen ist, sowie einen Aufsatz 14, der bei in die Gebäudewand eingesetztem Einsatz auf der Gebäudewand aufsitzt oder bündig mit dieser abschließt. Der elektrische Schalter 10 soll vorliegend ein Lichtschalter sein. Die eigentliche Schaltmechanik sitzt im Teil 16 des Einsatzes 12 und ist in an sich bekannter Weise ausgebildet. Zusätzlich zu diesem herkömmlichen Teil 16 des Einsatzes 12 ist nun auch ein Teil 18 des Einsatzes 12 vorgesehen. Dieser Teil 18 empfängt Energie aus den Netzleitungen, die in in der FIG 1 nicht dargestellter Weise mit dem Lichtschalter 10 gekoppelt sind. Der Teil 18 des Einsatzes 12 umfasst Mittel zum Erzeugen eines zeitlich variablen elektromagnetischen Feldes 19. Wie derartige Mittel auszubilden sind, ist allgemein bekannt: Man bildet einen elektrischen Schwingkreis, wobei besondere Aufmerksamkeit auf eine Sendespule zu legen ist, so wie bei einem Transformator. Der Aufsatz 14 umfasst einen Rahmen 20, in dem eine Schaltwippe 22 montiert ist, die unterschiedlich verkippt, je nach dem ob man in FIG 1 weiter unten auf die Schaltwippe 22 drückt oder weiter oben auf die Schaltwippe 22 drückt, und die beiden Kippzustände der Schaltwippe 22 entsprechen dem geschalteten und dem nicht geschalteten Zustand des Schalters 10.

Die Schaltwippe 22 ist im Einzelnen in Explosionsdarstellung in FIG 2 dargestellt. Sie umfasst einen Schaltwippenkörper 24, der eine Leiterplatte 26 mit einer Empfängerspule 28 und einer zentralen Prozessoreinrichtung 30 (CPU, Central Processing Unit) sowie darauf eine OLED-Anzeige 32 trägt. Die Spule 28 dient als Mittel zum Gewinn von elektrischen Strom (per Induktion) aus dem zeitlich variablen Feld 19, das durch den Teil 18 des Einsatzes 12 erzeugt wird. Der Strom wird der zentralen Prozessoreinrichtung 30 zugeführt, und er wird auch der OLED-Anzeige 32 zugeführt. Die zentrale Prozessoreinrichtung 30 steuert die OLED-Anzeige 32 an.

Die Erfindung ermöglicht es, eine Schaltwippe 22 eines Schalters 10 mit einem elektrischen Verbraucher wie etwa der OLED-Anzeige 32 auszustatten, ohne dass eine Verkabelung erforderlich ist. Dies gelingt dadurch, dass die Energie drahtlos übertragen wird.

Die Erfindungsidee kann auch zum Speisen von anderen elektrischen Verbrauchern verwendet werden. So kann auf der Leiterplatte 26 ein Funkempfänger (nicht gezeigt) vorgesehen sein, über den Daten zugeführt werden, welche die Art der Anzeige auf der OLED-Anzeige 32 bestimmen sollen. Die Schaltwippe 22 oder auch der Rahmen 20 des Aufsatzes 14 kann mit einer Beleuchtung, z.B. durch Leuchtdioden, versehen sein. Durch die drahtlose Übertragung von Energie ist es möglich, den Aufsatz 14 abnehmbar zu gestalten für den Fall, dass beispielsweise die Gebäudewand angestrichen werden soll. Durch die drahtlose Übertragung wird auch jede Gefährdung einer Bedienperson durch eine Netzspannung, wie sie üblicherweise im Teil 16 anliegt, vermieden.

Bezugszeichenliste
- 10: Elektrischer Schalter
- 12: Einsatz
- 14: Aufsatz
- 16: Teil des Einsatzes 12
- 18: Teil des Einsatzes 12
- 19: Elektromagnetisches Feld
- 20: Rahmen des Aufsatzes 14
- 22: Schaltwippe
- 24: Schaltwippenkörper
- 26: Leiterplatte
- 28: Empfängerspule
- 30: Zentrale Prozessoreinheit
- 32: OLED-Anzeige

## Patentansprüche

1. Elektrischer Schalter (10) für ein Gebäudesystem, mit einem in eine Gebäudewand einsetzbaren Einsatz (12) und einer mit dem Einsatz verbundenen, bei in die Gebäudewand eingesetztem Einsatz (12) von der Seite der Oberfläche der Gebäudewand zugänglichen Schaltwippe(22), die ein Funktionselement (30, 32) aufweist, welches im Betrieb elektrische Energie verbraucht, wobei
in oder an dem Einsatz (12) Mittel (18) zum Erzeugen eines zeitlich variablen elektromagnetischen Feldes (19) bereitgestellt sind, und dass die Schaltwippe(22) Mittel (28) zum Gewinnen von elektrischem Strom aus dem zeitlich variablen Feld (19) umfasst, über die Energie zum Betrieb des Funktionselements (30, 32) bereitgestellt wird,
**dadurch gekennzeichnet, dass**
das Funktionselement eine OLED-Anzeige (32) und Mittel (30) zum Ansteuern der OLED-Anzeige (32) umfasst, wobei die Mittel (30) zum Ansteuern der OLED-Anzeige (32) mit einem Funkempfänger zum drahtlosen Empfangen von Daten gekoppelt sind und wobei in dem in die Gebäudewand einsetzbaren Einsatz (12) ein Funksender vorgesehen ist.

2. Elektrischer Schalter (10) nach Anspruch 1,
**dadurch gekennzeichnet, dass**
das Funktionselement ein oder mehrere Leuchtdioden oder eine Leuchtdiodenanordnung umfasst.

3. Gebäudewand mit einem in sie eingesetzten elektrischen Schalter (10) nach einem der vorhergehenden Ansprüche.

## Claims

1. Electrical switch (10) for a building system having an insert (12) which can be set into a building wall and a rocker switch (22) connected with the insert and accessible from a side of the surface of the building wall with the insert (12) set into the building wall, which has a function element (30, 32) which consumes electrical energy during operation, wherein
means (18) for the generation of a temporarily variable electromagnetic field are provided in or on the insert (12) and the rocker switch (22) comprises means for the production of electrical current from the temporarily variable field (19), via which energy for operation of the function element (30, 32) is made available,
**characterised in that**
the function element comprises an OLED display (32) and means (30) for actuating the OLED display (32), wherein the means for actuating the OLED display (32) are linked with a radio receiver for the wireless reception of data, and wherein a radio transmitter is provided in the insert (12) which can be set into the building wall.

2. Electrical switch (10) according to claim 1,
**characterised in that**
the function element comprises one or more LEDs or an LED arrangement.

3. Building wall with an electrical switch (10) set into said wall, according to one of the preceding claims.

## Revendications

1. Commutateur électrique (10) pour un système de bâtiment, comprenant une pièce d'insertion (12) encastrable dans un mur de bâtiment et un interrupteur à bascule (22) relié à la pièce d'insertion et accessible du côté de la surface du mur de bâtiment lorsque la pièce d'insertion (12) est encastrée dans ce dernier, lequel interrupteur à bascule (22) présente un élément fonctionnel (30, 32) qui consomme de l'énergie électrique en fonctionnement, étant précisé qu'il est prévu dans ou sur la pièce d'insertion (12) des moyens (18) destinés à produire un champ électromagnétique (19) variable dans le temps, et que l'interrupteur à bascule (22) comprend des moyens (28) permettant de récupérer du courant électrique du champ (19) variable dans le temps et de fournir de l'énergie pour le fonctionnement de l'élément fonctionnel (30, 32),
**caractérisé en ce que**
l'élément fonctionnel comprend un affichage OLED (32) et des moyens (30) pour commander l'affichage OLED (32), les moyens (30) pour commander l'affichage OLED (32) étant couplés à un récepteur radio pour la réception sans fil de données, et un émetteur radio étant prévu dans la pièce d'insertion (12) encastrable dans le mur de bâtiment.

2. Commutateur électrique (10) selon la revendication 1,
**caractérisé en ce que**
l'élément fonctionnel comprend une ou plusieurs diodes électroluminescentes ou un agencement de diodes électroluminescentes.

3. Mur de bâtiment avec un commutateur électrique (10) encastré dans celui-ci selon l'une des revendications précédentes.
